# EUROPEAN PATENT APPLICATION

(11) **EP 4 435 484 A1**
(43) Date of publication of application: **25.09.2024**
(21) Application number: 22923362.2
(22) Date of filing: 31.10.2022
(51) Int. Cl.: G02B 6/38

(54) **OPTICAL FIBER CONNECTOR AND OPTICAL FIBER CONNECTOR ASSEMBLY**

(30) Priority: 25.01.2022 CN 202210089867
(71) Applicant: Huawei Technologies Co., Ltd., Shenzhen, Guangdong 518129 (CN)
(72) Inventor: LI, Xiupeng, Shenzhen, Guangdong 518129 (CN); LI, Weibo, Shenzhen, Guangdong 518129 (CN); CHENG, Lingjie, Shenzhen, Guangdong 518129 (CN)
(74) Representative: Maiwald GmbH
(86) International application number: PCT/CN2022/128613
(87) International publication number: WO 2023/142564

(57) **Abstract**

An optical fiber connector (1) and an optical fiber connector assembly are provided. The optical fiber connector (1) includes a main shaft (11), an outer frame sleeve (12), and a rear sleeve (15). The outer frame sleeve (12) is mounted on the main shaft (11). One end of the rear sleeve (15) is connected to the outer frame sleeve (12), and the other end of the rear sleeve (15) is connected to the main shaft (11). The rear sleeve (15) can drive the outer frame sleeve (12) to move relative to the main shaft (11) along an axial direction of the main shaft (11), and the rear sleeve (15) can rotate relative to the main shaft (11) and the outer frame sleeve (12), to lock or unlock a connection between the outer frame sleeve (12) and the main shaft (11). Therefore, working stability of the optical fiber connector is improved, and an applicable scenario of the optical fiber connector is added. Further use performance of the optical fiber connector is improved, and an application scope is expanded. Locking or unlocking of the outer frame sleeve (12) and the main shaft (11) is controlled by using the rear sleeve (15), to facilitate a user to operate at a remote end, so that inconvenience caused by small operation space is reduced, and space required for mounting the optical fiber connector is reduced.

## Description

This application claims priority to Chinese Patent Application 202210089867.3, filed with China National Intellectual Property Administration on January 25, 2022 and entitled "OPTICAL FIBER CONNECTOR AND OPTICAL FIBER CONNECTOR ASSEMBLY", which is incorporated herein by reference in its entirety.

### TECHNICAL FIELD

This application relates to the field of optical fiber connection technologies, and in particular, to an optical fiber connector and an optical fiber connector assembly.

### BACKGROUND

With development of communication technologies, a requirement for application of an optical fiber connection technology increasingly grows. An optical fiber connector is inserted and removed in a manner of pressing, sliding, rotation, or the like, and is connected to or disconnected from an optical fiber adapter so that an optical fiber is connected or disconnected. For ease of operation, a same locking component is usually operated to insert, connect, remove, and unlock an existing optical fiber connector in a same direction, and the optical fiber connector does not have an additional locking function. As a result, stability of a connection between the optical fiber connector and the optical fiber adapter or a traction cap is poor, and the connection between the optical fiber connector and the optical fiber adapter or the traction cap is prone to be accidentally disconnected, causing a problem such as an optical link exception or tube penetration failure.

### SUMMARY

This application provides an optical fiber connector and an optical fiber connector assembly, to lock a connection between an optical fiber connector and an optical fiber adapter or a traction cap.

A first aspect of this application provides an optical fiber connector, including:
a main shaft;
an outer frame sleeve, where the outer frame sleeve is mounted on the main shaft; and
a rear sleeve, where one end of the rear sleeve is connected to the outer frame sleeve, the other end of the rear sleeve is connected to the main shaft, the rear sleeve can drive the outer frame sleeve to move relative to the main shaft along an axial direction of the main shaft, and the rear sleeve can rotate relative to the main shaft and the outer frame sleeve, to lock or unlock a connection between the outer frame sleeve and the main shaft.

In this application, the connection between the outer frame sleeve and the main shaft is locked or unlocked, so that working stability of the optical fiber connector can be improved, and an applicable scenario of the optical fiber connector is added. Further, use performance of the optical fiber connector is improved, and an application scope is expanded. Locking or unlocking of the outer frame sleeve and the main shaft is controlled by using the rear sleeve, to facilitate a user to operate at a remote end, so that inconvenience caused by small operation space is reduced, and space required for mounting the optical fiber connector is reduced.

In a possible design, a first limiting part is disposed on the rear sleeve, and a first limiting matching part is disposed on the outer frame sleeve. The first limiting part can match the first limiting matching part, to lock a connection between the outer frame sleeve and the rear sleeve.

A second limiting part is disposed on the main shaft, and a second limiting matching part is disposed on the rear sleeve. The second limiting part can match the second limiting matching part, to lock a connection between the rear sleeve and the main shaft.

In this application, the first limiting part matches the first limiting matching part, and the second limiting part matches the second limiting matching part, to lock the connection between the outer frame sleeve and the main shaft, to simplify structures of the outer frame sleeve, the rear sleeve, and the main shaft, and reduce space required for mounting the outer frame sleeve, the rear sleeve, and the main shaft. Therefore, space for mounting the optical fiber connector is reduced.

In a possible design, the first limiting matching part includes a first extension part that extends along an axial direction of the outer frame sleeve and a second extension part that extends along a circumferential direction of the outer frame sleeve. The second limiting matching part includes a third extension part that extends along an axial direction of the rear sleeve and a fourth extension part that extends along a circumferential direction of the rear sleeve.

When the rear sleeve unlocks the connection between the outer frame sleeve and the main shaft, at least a part of the first limiting part is located in the first extension part, and the first limiting part can move along the first extension part, and/or at least a part of the second limiting part is located in the third extension part, and the second limiting part can move along the third extension part.

In this application, when the rear sleeve unlocks the connection between the outer frame sleeve and the main shaft, in one case, the rear sleeve is locked with the main shaft, and the outer frame sleeve can move relative to the rear sleeve along an axial direction of the main shaft. In another case, the rear sleeve drives the outer frame sleeve to move relative to the main shaft along an axial direction. Therefore, a movement mode of the outer frame sleeve and the rear sleeve is added, and a use manner and an applicable scenario of the optical fiber connector are further added.

In a possible design, the first limiting matching part includes a first extension part that extends along an axial direction of the outer frame sleeve and a second extension part that extends along a circumferential direction of the outer frame sleeve. The second limiting matching part includes a third extension part that extends along an axial direction of the rear sleeve and a fourth extension part that extends along a circumferential direction of the rear sleeve.

When the rear sleeve locks the connection between the outer frame sleeve and the main shaft, at least a part of the first limiting part is located in the second extension part and abuts against a side wall of the second extension part, and at least a part of the second limiting part is located in the fourth extension part and abuts against a side wall of the fourth extension part.

In this application, the first limiting matching part includes the first extension part that extends along the axial direction of the outer frame sleeve and the second extension part that extends along the circumferential direction of the outer frame sleeve. The second limiting matching part includes the third extension part that extends along the axial direction of the rear sleeve and the fourth extension part that extends along the circumferential direction of the rear sleeve. Therefore, the connection between the outer frame sleeve and the main shaft can be easily locked or unlocked, and a connection between a connecting component and the main shaft can also be easily locked or unlocked, so that a structure of the optical fiber connector is simplified. In addition, the connection between the outer frame sleeve and the main shaft is locked or unlocked by rotating the rear sleeve, so that a user operation is simplified and user experience is further improved.

In a possible design, a third limiting part is disposed on the side wall of the second extension part. When the first limiting part moves along the second extension part, the first limiting part can abut against the third limiting part.

In this application, the first limiting part can abut against the third limiting part, to limit movement of the first limiting part, and reduce a risk that the connection between the outer frame sleeve and the main shaft is unintentionally unlocked because the first limiting part moves along the second extension part under an external force, thereby improving stability of locking by the rear sleeve.

In a possible design, the first limiting matching part and the second limiting matching part are of one or more of an L-shape, a T-shape, and a U-shape.

In this application, the first limiting matching part and the second limiting matching part are of one or more of the L-shape, the T-shape, and the U-shape, to facilitate processing of the first limiting matching part and the second limiting matching part.

In a possible design, a fifth limiting part is disposed on the main shaft, and a fifth limiting matching part is disposed on the outer frame sleeve. When the outer frame sleeve moves relative to the main shaft along the axial direction of the main shaft, the fifth limiting part can match the fifth limiting matching part to limit a movement distance of the outer frame sleeve.

In this application, the fifth limiting part matches the fifth limiting matching part, to limit the movement distance of the outer frame sleeve, and reduce a risk that the outer frame sleeve is detached from the main shaft due to an excessively long movement distance of the outer frame sleeve, thereby improving stability of the connection between the outer frame sleeve and the main shaft.

In a possible design, a notch is disposed at an end that is of the outer frame sleeve and that is close to the rear sleeve.

In this application, the notch is disposed on the outer frame sleeve, to facilitate elastic deformation of a side wall of the outer frame sleeve, facilitate mounting of the rear sleeve and the outer frame sleeve, and reduce a risk of damage to the outer frame sleeve and the first limiting part, so that lifespans of the outer frame sleeve and the rear sleeve are prolonged.

A second aspect of this application provides an optical fiber connector assembly, including:
the optical fiber connector in any one of the foregoing aspects; and
an external component, where the external component is connected to a main shaft, and an outer frame sleeve can move relative to the main shaft, to lock or unlock a connection between the main shaft and the external component.

In this application, a connection between the outer frame sleeve and the main shaft is locked or unlocked, to lock or unlock a connection between the external component and the optical fiber connector, so that working stability of the optical fiber connector assembly can be improved, and an applicable scenario of the optical fiber connector assembly is added. Further, use performance of the optical fiber connector assembly is improved, and an application scope is expanded.

In a possible design, a matching part is disposed on the external component, a clamping matching part is disposed on the main shaft, and the matching part can match the clamping matching part.

In this application, the matching part matches the clamping matching part to implement the connection between the external component and the optical fiber connector, to simplify structures of the external component and the optical fiber connector, and reduce space required for the connection between the external component and the optical fiber connector. Therefore, a size of the optical fiber connector assembly is reduced, and flexibility of a mounting position of the optical fiber connector assembly is improved.

In a possible design, a first accommodation cavity is disposed on the outer frame sleeve. When the matching part matches the clamping matching part, the matching part can abut against a side wall of the first accommodation cavity.

The outer frame sleeve can move relative to the main shaft along an axial direction of the main shaft, to enable the matching part to abut against or not to abut against the side wall of the first accommodation cavity.

In this application, the matching part abuts against the side wall of the first accommodation cavity, to reduce a risk that the matching part is deformed under an external force and the matching part does not match the clamping matching part, thereby improving stability of the connection between the external component and the main shaft, and further improving working stability and use security of the optical fiber connector assembly.

It should be understood that the foregoing general descriptions and the following detailed descriptions are merely examples, and cannot limit this application.

### BRIEF DESCRIPTION OF DRAWINGS

FIG. 1 is an exploded view of an optical fiber connector assembly according to an embodiment of this application;
FIG. 2 is a schematic diagram of a structure of an external component in FIG. 1 according to an embodiment, where the external component is a traction cap;
FIG. 3 is a schematic diagram of a structure of the external component in FIG. 1 according to another embodiment, where the external component is an optical fiber adapter;
FIG. 4 is a sectional view of FIG. 1;
FIG. 5 is an exploded view of a part of a structure in FIG. 1;
FIG. 6 is a sectional view of a mounting base in FIG. 5;
FIG. 7 is a sectional view of an outer frame sleeve and a main shaft in FIG. 5 after assembled;
FIG. 8 is a schematic diagram of a structure of the outer frame sleeve in FIG. 5;
FIG. 9 is a schematic diagram of a structure of a rear sleeve in FIG. 5;
FIG. 10 is a sectional view of a local structure of the outer frame sleeve and the rear sleeve in FIG. 5 after assembled;
FIG. 11 is an exploded view of the main shaft and the rear sleeve in FIG. 5 from another perspective; and
FIG. 12 is a sectional view of a local structure of the main shaft and the rear sleeve in FIG. 11 after assembled.

### Reference numerals:

1-optical fiber connector;
11-main shaft;
111-clamping matching part;
112-fifth limiting part;
113-second limiting part;
114-external thread;
12-outer frame sleeve;
121-first accommodation cavity;
122-groove;
123-fifth limiting matching part;
124-first limiting matching part;
124a-third limiting part;
125-notch;
13-elastic component;
14-mounting base;
141-internal thread;
15-rear sleeve;
151-second accommodation cavity;
152-first limiting part;
153-second limiting matching part;
154-operation part;
16-C-shape sleeve;
17-inner frame sleeve;
18-ferrule base;
2-external component; and
21-matching part.

The accompanying drawings herein are incorporated into the specification and constitute a part of the specification, show embodiments conforming to this application, and are used together with the specification to explain a principle of this application.

### DESCRIPTION OF EMBODIMENTS

To better understand the technical solutions of this application, the following describes embodiments of this application in detail with reference to the accompanying drawings.

In a specific embodiment, the following further describes this application in detail by using specific embodiments and with reference to the accompanying drawings.

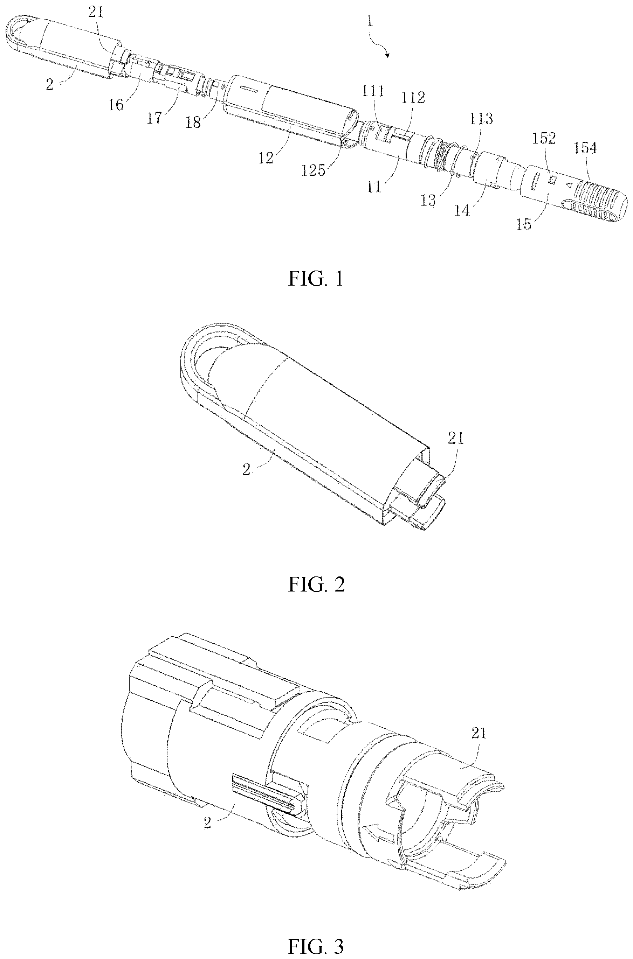

An embodiment of this application provides an optical fiber connector assembly. As shown in FIG. 1, the optical fiber connector assembly includes an optical fiber connector 1 and an external component 2. As shown in FIG. 2, the external component 2 may be a traction cap, to facilitate an operation such as tube penetration. As shown in FIG. 3, the external component 2 may alternatively be an optical fiber adapter, to facilitate connection of an optical fiber. The external component 2 is a traction cap or an optical fiber adapter, so that use requirements of the optical fiber connector 1 in different working environments can be met. Therefore, an application scope of the optical fiber connector 1 is expanded and use performance of the optical fiber connector 1 is improved.

As shown in FIG. 1, the optical fiber connector 1 further includes a C-shape sleeve 16, an inner frame sleeve 17, and a ferrule base 18, to meet the use requirement of the optical fiber connector 1.

Specifically, as shown in FIG. 1, the optical fiber connector 1 includes a main shaft 11, and a clamping matching part 111 is disposed on the main shaft 11. As shown in FIG. 2 and FIG. 3, a matching part 21 is disposed on the external component 2, and the matching part 21 can match the clamping matching part 111, to implement a connection between the external component 2 and the optical fiber connector 1.

In this embodiment of this application, the matching part 21 matches the clamping matching part 111 to implement the connection between the external component 2 and the optical fiber connector 1, to simplify structures of the external component 2 and the optical fiber connector 1, and reduce space required for the connection between the external component 2 and the optical fiber connector 1. Therefore, a size of the optical fiber connector assembly is reduced, and flexibility of a mounting position of the optical fiber connector assembly is improved.

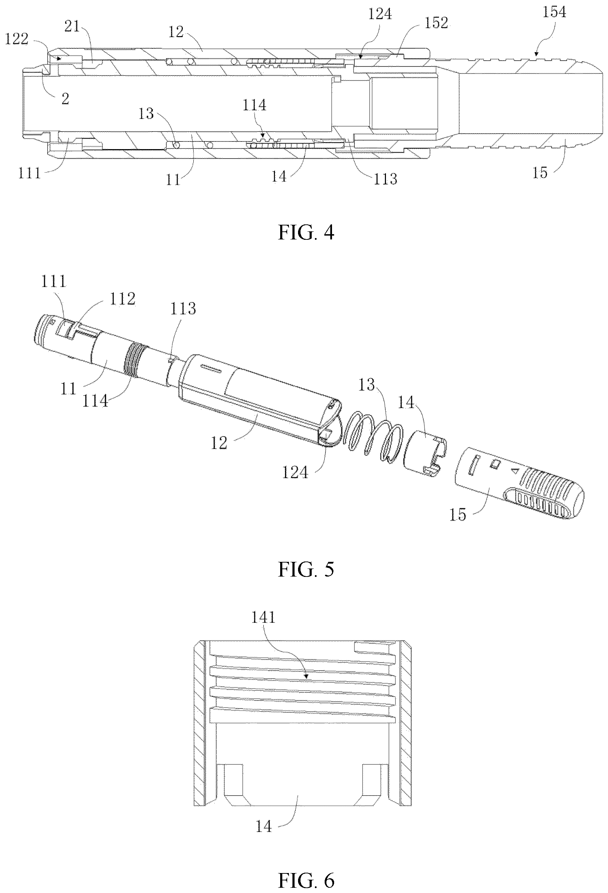

More specifically, as shown in FIG. 1 and FIG. 4, the optical fiber connector 1 further includes an outer frame sleeve 12, and a first accommodation cavity 121 is disposed on the outer frame sleeve 12. After the matching part 21 matches the clamping matching part 111, at least a part of the matching part 21 is located in the first accommodation cavity 121 and abuts against a side wall of the first accommodation cavity 121.

In this embodiment of this application, after the matching part 21 of the external component 2 matches the clamping matching part 111 of the main shaft 11, the at least a part of the matching part 21 can abut against the side wall of the first accommodation cavity 121 of the outer frame sleeve 12, to reduce a risk that the matching part 21 of the external component 2 is deformed under an external force and does not match the clamping matching part 111, thereby improving stability of a connection between the external component 2 and the main shaft 11, reducing a risk that the external component 2 is unintentionally detached from the optical fiber connector 1 in a use process of the optical fiber connector assembly, and then improving working stability and use security of the optical fiber connector assembly.

A manner in which the matching part 21 matches the clamping matching part 111 may be clamping. The manner in which the matching part 21 matches the clamping matching part 111 is not specially limited in this application.

More specifically, the outer frame sleeve 12 can move relative to the main shaft 11 along an axial direction of the main shaft 11, so that the matching part 21 of the external component 2 abuts against or does not abut against the side wall of the first accommodation cavity 121. As shown in FIG. 4, a groove 122 is disposed on the side wall of the first accommodation cavity 121. When the groove 122 moves along the axial direction of the main shaft 11 to be above the matching part 21, the matching part 21 does not match the clamping matching part 111 under the external force.

In this embodiment of this application, when the external component 2 is connected to the optical fiber connector 1, the matching part 21 matches the clamping matching part 111, and the matching part 21 abuts against the side wall of the first accommodation cavity 121 of the outer frame sleeve 12, to limit deformation of the matching part 21, so that the connection between the external component 2 and the optical fiber connector 1 is locked. In this case, the groove 122 is located above the side of the matching part 21 along the axial direction of the main shaft 11. When the external component 2 and the optical fiber connector 1 are detached, the outer frame sleeve 12 is controlled to move relative to the main shaft 11 along the axial direction of the main shaft 11, so that the groove 122 moves to be right above the matching part 21. In this case, the matching part 21 can be deformed under the external force, so that the matching part 21 does not match the clamping matching part 111, to help detach the external component 2 and the optical fiber connector 1. Therefore, the groove 122 is disposed to help release matching between the matching part 21 and the clamping matching part 111. That the matching part 21 matches or does not match the clamping matching part 111 is controlled by controlling movement of the outer frame sleeve 12 relative to the main shaft 11, to simplify a user operation and simplify a structure of the optical fiber connector assembly.

More specifically, as shown in FIG. 5, an elastic component 13 is further disposed on the optical fiber connector 1. One end of the elastic component 13 is connected to the outer frame sleeve 12, and the other end of the elastic component 13 is connected to the main shaft 11.

In this embodiment of this application, in a process of connecting the external component 2 to the optical fiber connector 1, when the matching part 21 does not match the clamping matching part 111, the outer frame sleeve 12 moves, driven by the matching part 21, in a mounting direction of the external component 2 relative to the main shaft 11 along the axial direction of the main shaft 11. In this case, the elastic component 13 is compressed and generates an elastic force. After the matching part 21 matches the clamping matching part 111, the matching part 21 cancels the force to the outer frame sleeve 12. The outer frame sleeve 12 moves, driven by the elastic component 13, in a direction of approaching the external component 2 relative to the main shaft 11 along the axial direction of the main shaft 11, to enable the matching part 21 to abut against the side wall of the first accommodation cavity 121, to lock the connection between the external component 2 and the optical fiber connector 1. When the external component 2 and the optical fiber connector 1 are detached, the outer frame sleeve 12 is driven to move in the mounting direction of the external component 2 relative to the main shaft 11 along the axial direction of the main shaft 11. In this case, the elastic component 13 is compressed and generates the elastic force. When the outer frame sleeve 12 is not controlled, the outer frame sleeve 12 moves, driven by the elastic component 13, in the direction of approaching the external component 2 relative to the main shaft 11 along the axial direction of the main shaft 11, to facilitate next mounting of the external component 2. Therefore, the elastic component 13 is disposed to enable the outer frame sleeve 12 to automatically return to an initial position, to facilitate locking of the connection between the external component 2 and the optical fiber connector 1, and facilitate next mounting of the external component 2 and the optical fiber connector 1. Therefore, the structure of the optical fiber connector 1 is further simplified, and the user operation is simplified.

As shown in FIG. 5, a mounting base 14 is further disposed on the optical fiber connector 1. The mounting base 14 is mounted on the main shaft 11, and one end of the elastic component 13 is connected to the main shaft 11 through the mounting base 14.

In this embodiment of this application, the mounting base 14 is disposed to facilitate a connection between the elastic component 13 and the main shaft 11. Therefore, a connection manner and a connection structure of the elastic component 13 and the main shaft 11 are simplified, stability of the connection between the elastic component 13 and the main shaft 11 is improved, and a risk that the elastic component 13 disconnects with the main shaft 11 in a use or transportation process is reduced. Further, working stability of the optical fiber connector 1 is improved.

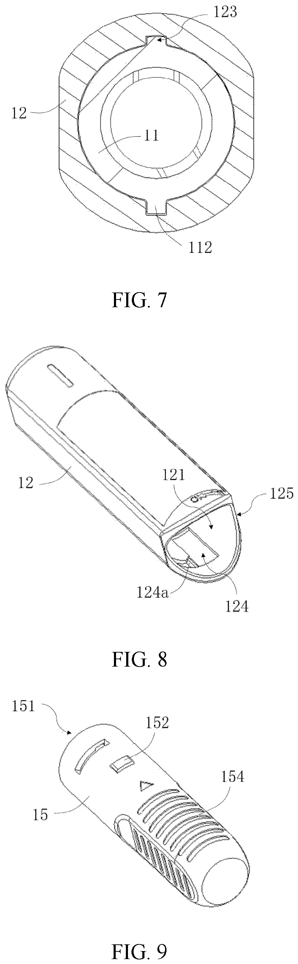

More specifically, as shown in FIG. 5 and FIG. 7, a fifth limiting part 112 is disposed on the main shaft 11, and a fifth limiting matching part 123 is disposed on the outer frame sleeve 12. When the outer frame sleeve 12 moves relative to the main shaft 11 along the axial direction of the main shaft 11, the fifth limiting part 112 can match the fifth limiting matching part 123 to limit a movement distance of the outer frame sleeve 12, and reduce a risk that the outer frame sleeve 12 is detached from the main shaft 11 due to an excessively large movement distance of the outer frame sleeve 12, thereby improving stability of a connection between the outer frame sleeve 12 and the main shaft 11.

As shown in FIG. 5, the fifth limiting part 112 is of a T-shape to increase a contact area between the fifth limiting part 112 and the fifth limiting matching part 123, and reduce a risk that the fifth limiting part 112 and the fifth limiting matching part 123 are damaged due to an excessively small contact area between the fifth limiting part 112 and the fifth limiting matching part 123, so that lifespans of the fifth limiting part 112 and the fifth limiting matching part 123 are prolonged. In addition, the fifth limiting part 112 may alternatively be of a rectangle-shape, a trapezoid-shape, or the like. A specific form of a structure of the fifth limiting part 112 is not specifically limited in this application.

The optical fiber connector assembly locks or unlocks a connection between a connecting component and the optical fiber connector 1 by controlling the movement of the outer frame sleeve 12. In the use process or a transportation process of the optical fiber connector assembly, the outer frame sleeve 12 is prone to move due to external interference, causing the connecting component and the optical fiber connector 1 to be unintentionally unlocked. Consequently, the optical fiber connector assembly cannot work normally.

To resolve the foregoing problem, as shown in FIG. 5, a rear sleeve 15 is further disposed on the optical fiber connector 1. One end of the rear sleeve 15 is connected to the outer frame sleeve 12, the other end of the rear sleeve 15 is connected to the main shaft 11, and the rear sleeve 15 can lock or unlock the connection between the outer frame sleeve 12 and the main shaft 11.

In this embodiment of this application, in a process of mounting or detaching the external component 2, the rear sleeve 15 controls the outer frame sleeve 12 and the main shaft 11 to be in an unlocked state. In this case, the outer frame sleeve 12 can move relative to the main shaft 11 along the axial direction of the main shaft 11, to lock or unlock the connection between the external component 2 and the main shaft 11. After the outer frame sleeve 12 locks the connection between the external component 2 and the main shaft 11, the rear sleeve 15 can lock the connection between the outer frame sleeve 12 and the main shaft 11, so that the outer frame sleeve 12 cannot move relative to the main shaft 11, and a risk that the outer frame sleeve 12 unlocks the connection between the external component 2 and the main shaft 11 under the external force is reduced. Therefore, stability of the connection between the external component 2 and the main shaft 11 and the working stability of the optical fiber connector assembly are improved. In addition, a user may select, based on a use scenario and a use requirement of the optical fiber connector assembly, whether to lock the connection between the outer frame sleeve 12 and the main shaft 11. When a working environment of the optical fiber connector assembly is stable and simple, the user can control the rear sleeve 15 to unlock the connection between the outer frame sleeve 12 and the main shaft 11, to facilitate mounting or replacement of the external component 2. When the working environment of the optical fiber connector assembly is complex (for example, a complex tube penetration scenario), the user can lock the connection between the outer frame sleeve 12 and the main shaft 11 by using the rear sleeve 15, to increase the stability of the connection between the external component 2 and the main shaft 11. Therefore, the connection between the outer frame sleeve 12 and the main shaft 11 is locked or unlocked, so that the working stability of the optical fiber connector assembly can be improved, and an applicable scenario of the optical fiber connector assembly is added. Further, use performance of the optical fiber connector assembly is improved, and an application scope is expanded. Locking or unlocking of the connection between the outer frame sleeve 12 and the main shaft 11 is controlled by using the rear sleeve 15, to facilitate the user to operate at a remote end, so that inconvenience caused by small operation space is reduced, and space required for mounting the optical fiber connector assembly is reduced.

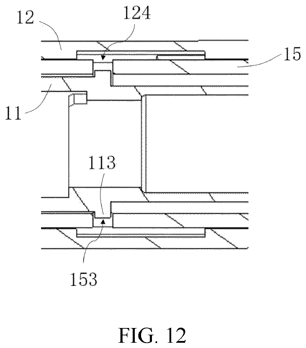

Specifically, as shown in FIG. 8 to FIG. 12, a first limiting part 152 is disposed on the rear sleeve 15, a first limiting matching part 124 is disposed on the side wall of the first accommodation cavity 121 of the outer frame sleeve 12, and the first limiting part 152 can match the first limiting matching part 124, to limit movement of the outer frame sleeve 12 relative to the rear sleeve 15. A second limiting part 113 is disposed on the main shaft 11, a second accommodation cavity 151 is disposed on the rear sleeve 15, and a second limiting matching part 153 is disposed on a side wall of the second accommodation cavity 151. The second limiting part 113 can match the second limiting matching part 153, to limit movement of the rear sleeve 15 relative to the main shaft 11.

In this embodiment of this application, the outer frame sleeve 12 can move relative to the rear sleeve 15 along the axial direction of the main shaft 11, and/or the rear sleeve 15 can move relative to the main shaft 11, so that the outer frame sleeve 12 moves relative to the main shaft 11. Therefore, the first limiting part 152 matches the first limiting matching part 124, so that the outer frame sleeve 12 cannot move relative to the rear sleeve 15. The second limiting part 113 matches the second limiting matching part 153, so that a combined structure formed by the outer frame sleeve 12 and the rear sleeve 15 cannot move relative to the main shaft 11. Therefore, the outer frame sleeve 12 cannot move relative to the main shaft 11, to achieve an objective of locking the connection between the outer frame sleeve 12 and the main shaft 11. Therefore, the first limiting part 152 matches the first limiting matching part 124 and the second limiting part 113 matches the second limiting matching part 153 to lock the connection between the outer frame sleeve 12 and the main shaft 11, thereby simplifying structures of the outer frame sleeve 12, the rear sleeve 15, and the main shaft 11, and reduce space required for mounting the outer frame sleeve 12, the rear sleeve 15, and the main shaft 11. Therefore, space for mounting the optical fiber connector 1 is reduced.

A manner in which the first limiting part 152 can match the first limiting matching part 124 may be clamping, and a manner in which the second limiting part 113 can match the second limiting matching part 153 may be clamping. The manner in which the first limiting part 152 can match the first limiting matching part 124 and the manner in which the second limiting part 113 can match the second limiting matching part 153 are not specially limited in this application.

More specifically, as shown in the figures, the first limiting matching part 124 includes a first extension part that extends along an axial direction of the outer frame sleeve 12 and a second extension part that extends along a circumferential direction of the outer frame sleeve 12. The second limiting matching part 153 includes a third extension part that extends along an axial direction of the rear sleeve 15 and a fourth extension part that extends along a circumferential direction of the rear sleeve 15. When the rear sleeve 15 unlocks the connection between the outer frame sleeve 12 and the main shaft 11, at least a part of the first limiting part 152 is located in the first extension part, and the first limiting part 152 can move along the first extension part; and at least a part of the second limiting part 113 is located in the third extension part, and the second limiting part 113 can move along the third extension part. When the rear sleeve 15 locks the connection between the outer frame sleeve 12 and the main shaft 11, at least a part of the first limiting part 152 is located in the second extension part and abuts against a side wall of the second extension part, and at least a part of the second limiting part 113 is located in the fourth extension part and abuts against a side wall of the fourth extension part.

In this embodiment of this application, in a process of mounting the external component 2 on the main shaft 11, the rear sleeve 15 unlocks the connection between the outer frame sleeve 12 and the main shaft 11. In this case, the outer frame sleeve 12 moves, driven by the external component 2, in a direction of approaching the rear sleeve 15 along the axial direction of the main shaft 11, in other words, the first limiting matching part 124 moves along the first extension part. After the matching part 21 of the external component 2 matches the clamping matching part 111 of the main shaft 11, the outer frame sleeve 12 moves, driven by the elastic component 13, in the direction of approaching the external component 2 along the axial direction of the main shaft 11, to lock the connection between the external component 2 and the main shaft 11. In this case, the rear sleeve 15 is driven to rotate relative to the main shaft 11, so that the first limiting part 152 enters the second extension part and abuts against the second extension part, and the second limiting part 113 enters the fourth extension part and abuts against the side wall of the fourth extension part, to lock the connection between the outer frame sleeve 12 and the main shaft 11, thereby improving the stability of the connection between the external component 2 and the main shaft 11. In a process of detaching the external component 2 from the main shaft 11, the rear sleeve 15 is driven to rotate relative to the main shaft 11, so that the first limiting part 152 enters the first extension part and abuts against a side wall of the first extension part, and the second limiting part 113 enters the third extension part, to unlock the connection between the outer frame sleeve 12 and the main shaft 11. In this case, the rear sleeve 15 is driven to move relative to the main shaft 11 in a direction away from the external component, in other words, the second limiting part 113 moves along the third extension part, and the outer frame sleeve 12 moves, driven by the first limiting part 152, along with the rear sleeve 15 in a direction away from the external component 2, to unlock the connection between the external component 2 and the main shaft 11. Therefore, the first limiting matching part 124 includes the first extension part that extends along the axial direction of the outer frame sleeve 12 and the second extension part that extends along the circumferential direction of the outer frame sleeve 12. The second limiting matching part 153 includes the third extension part that extends along the axial direction of the rear sleeve 15 and the fourth extension part that extends along the circumferential direction of the rear sleeve 15. Therefore, the connection between the outer frame sleeve 12 and the main shaft 11 can be easily locked or unlocked, and a connection between the connecting component and the main shaft 11 can also be easily locked or unlocked, so that the structure of the optical fiber connector 1 is simplified. In addition, the connection between the outer frame sleeve 12 and the main shaft 11 is locked or unlocked by rotating the rear sleeve 15, so that the user operation is simplified and user experience is further improved.

One of the first limiting part 152 and the first limiting matching part 124 is of a protrusion structure, and the other is of a groove structure. One of the second limiting part 113 and the second limiting matching part 153 is of a protrusion structure, and the other is of a groove structure. In this application, both the first limiting part 152 and the second limiting part 113 are of protrusion structures, and both the first limiting matching part 124 and the second limiting matching part 153 are of groove structures, to facilitate processing of the first limiting part 152, the second limiting part 113, the first limiting matching part 124, and the second limiting matching part 153.

In addition, the first limiting matching part 124 and the second limiting matching part 153 may be of one or more of an L-shape, a T-shape, and a U-shape, or may be of another deformed structure, to facilitate the processing of the first limiting matching part 124 and the second limiting matching part 153. Specific structures of the first limiting matching part 124 and the second limiting matching part 153 are not specially limited in this application, provided that the first limiting part 152 can move along an axial direction and a circumferential direction of the first limiting matching part 124, and the second limiting part 113 can move along an axial direction and a circumferential direction of the second limiting matching part 153, to lock or unlock the connection between the outer frame sleeve 12 and the main shaft 11 by using the rear sleeve 15.

More specifically, as shown in FIG. 8, a third limiting part 124a is disposed on the side wall of the second extension part. When moving in the second extension part, the first limiting part 152 can abut against the third limiting part 124a.

In this embodiment of this application, the rear sleeve 15 is driven to rotate, so that when the first limiting part 152 moves in the second extension part, the first limiting part 152 can abut against the third limiting part 124a, to limit movement of the first limiting part 152, and reduce a risk that the connection between the outer frame sleeve 12 and the main shaft 11 is unintentionally unlocked because the first limiting part 152 moves along the second extension part under the external force, thereby improving stability of locking by using the rear sleeve 15, and improve the working stability of the optical fiber connector assembly.

In addition, as shown in FIG. 8, a notch 125 is disposed, along the axial direction of the outer frame sleeve 12, at an end that is of the outer frame sleeve 12 and that is close to the rear sleeve 15.

In this embodiment of this application, because the first limiting part 152 is disposed on the rear sleeve 15, when the rear sleeve 15 is connected to the outer frame sleeve 12, the end that is of the outer frame sleeve 12 and that is close to the rear sleeve 15 needs to be elastically deformed, so that the first limiting part 152 enters the first accommodation cavity 121 of the outer frame sleeve 12 and abuts against the first limiting matching part 124. Therefore, the notch 125 is disposed on the outer frame sleeve 12, to facilitate elastic deformation of a side wall of the outer frame sleeve 12, facilitate mounting of the rear sleeve 15 and the outer frame sleeve 12, and reduce a risk of damage to the outer frame sleeve 12 and the first limiting part 152, so that lifespans of the outer frame sleeve 12 and the rear sleeve 15 are prolonged.

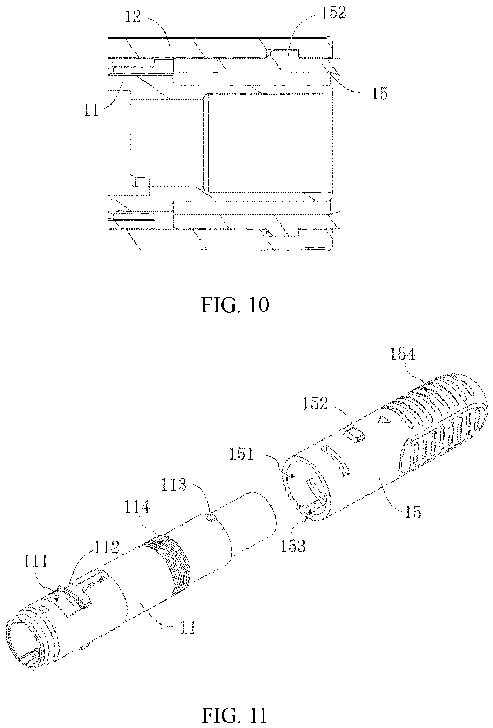

As shown in FIG. 11, the rear sleeve 15 includes an operation part 154, and a protrusion or a groove 122 is disposed on the operation part 154.

In this embodiment of this application, when mounting, using, or detaching the optical fiber connector assembly, the user holds the operation part 154. The protrusion or the groove 122 is disposed on the operation part 154, so that friction of the operation part 154 can be increased, thereby improving user experience. In addition, the first limiting part 152 on the rear sleeve 15 is used as a boundary. An end that is of the rear sleeve 15 and that is close to the connecting component is a hard end, to be specific, has high strength to increase a force that can be borne by the rear sleeve 15. An end that is of the rear sleeve 15 and that is away from the connecting component is a soft end, to be specific, can be elastically deformed and the soft end can play a buffer function, to reduce a risk that an internal optical fiber of the optical fiber connector 1 is broken, thereby improving the use performance of the optical fiber connector assembly.

It should be noted that a part of this patent application document includes a copyright-protected content. The copyright owner reserves the copyright except copies are made for the patent documents or the recorded content of the patent documents in the Patent Office.

## Claims

1. An optical fiber connector, wherein the optical fiber connector comprises:
a main shaft;
an outer frame sleeve, wherein the outer frame sleeve is mounted on the main shaft; and
a rear sleeve, wherein one end of the rear sleeve is connected to the outer frame sleeve, the other end of the rear sleeve is connected to the main shaft, the rear sleeve can drive the outer frame sleeve to move relative to the main shaft along an axial direction of the main shaft, and the rear sleeve can rotate relative to the main shaft and the outer frame sleeve, to lock or unlock a connection between the outer frame sleeve and the main shaft.

2. The optical fiber connector according to claim 1, wherein a first limiting part is disposed on the rear sleeve, a first limiting matching part is disposed on the outer frame sleeve, and the first limiting part can match the first limiting matching part, to lock a connection between the outer frame sleeve and the rear sleeve; and
a second limiting part is disposed on the main shaft, a second limiting matching part is disposed on the rear sleeve, and the second limiting part can match the second limiting matching part, to lock a connection between the rear sleeve and the main shaft.

3. The optical fiber connector according to claim 2, wherein the first limiting matching part comprises a first extension part that extends along an axial direction of the outer frame sleeve and a second extension part that extends along a circumferential direction of the outer frame sleeve, and the second limiting matching part comprises a third extension part that extends along an axial direction of the rear sleeve and a fourth extension part that extends along a circumferential direction of the rear sleeve; and
when the rear sleeve unlocks the connection between the outer frame sleeve and the main shaft, at least a part of the first limiting part is located in the first extension part, and the first limiting part can move along the first extension part, and/or at least a part of the second limiting part is located in the third extension part, and the second limiting part can move along the third extension part.

4. The optical fiber connector according to claim 2, wherein the first limiting matching part comprises a first extension part that extends along an axial direction of the outer frame sleeve and a second extension part that extends along a circumferential direction of the outer frame sleeve, and the second limiting matching part comprises a third extension part that extends along an axial direction of the rear sleeve and a fourth extension part that extends along a circumferential direction of the rear sleeve; and
when the rear sleeve locks the connection between the outer frame sleeve and the main shaft, at least a part of the first limiting part is located in the second extension part and abuts against a side wall of the second extension part, and at least a part of the second limiting part is located in the fourth extension part and abuts against a side wall of the fourth extension part.

5. The optical fiber connector according to claim 4, wherein a third limiting part is disposed on the side wall of the second extension part, and when the first limiting part moves along the second extension part, the first limiting part can abut against the third limiting part.

6. The optical fiber connector according to claim 2, wherein the first limiting matching part and the second limiting matching part are of one or more of an L-shape, a T-shape, and a U-shape.

7. The optical fiber connector according to any one of claims 1 to 6, wherein a fifth limiting part is disposed on the main shaft, a fifth limiting matching part is disposed on the outer frame sleeve, and when the outer frame sleeve moves relative to the main shaft along the axial direction of the main shaft, the fifth limiting part can match the fifth limiting matching part to limit a movement distance of the outer frame sleeve.

8. The optical fiber connector according to any one of claims 1 to 6, wherein a notch is disposed at an end that is of the outer frame sleeve and that is close to the rear sleeve.

9. An optical fiber connector assembly, wherein the optical fiber connector assembly comprises:
an optical fiber connector, wherein the optical fiber connector is the optical fiber connector according to any one of claims 1 to 8; and
an external component, wherein the external component is connected to a main shaft, and an outer frame sleeve can move relative to the main shaft, to lock or unlock a connection between the main shaft and the external component.

10. The optical fiber connector assembly according to claim 9, wherein a matching part is disposed on the external component, a clamping matching part is disposed on the main shaft, and the matching part can match the clamping matching part.

11. The optical fiber connector assembly according to claim 10, wherein a first accommodation cavity is disposed on the outer frame sleeve, and when the matching part matches the clamping matching part, the matching part can abut against a side wall of the first accommodation cavity; and
the outer frame sleeve can move relative to the main shaft along an axial direction of the main shaft, to enable the matching part to abut against or not to abut against the side wall of the first accommodation cavity.
